# EUROPÄISCHE PATENTANMELDUNG

(11) **EP 0 716 806 A1**
(43) Veröffentlichungstag der Anmeldung: **19.06.1996**
(21) Anmeldenummer: 95117991.0
(22) Anmeldetag: 15.11.1995
(51) Int. Cl.: A01K 1/015

(54) **Hochporöses Granulat zur Verwendung als Tierstreu**

(30) Priorität: 17.11.1994 DE 4440952; 17.03.1995 DE 19509747
(71) Anmelder: Paul Wüseke Kalksandsteinwerk GmbH & Co. KG, D-33104 Paderborn (DE)
(72) Erfinder: Krämer, Walter, 49577 Eggermühlen-Besten (DE); Wüseke, Paul, 33142 Büren-Steinhausen (DE); Wüseke, Gregor, 33129 Delbrück (DE)
(74) Vertreter: Hanewinkel, Lorenz, Dipl.-Phys.

(57) **Zusammenfassung**

Das hochporöse Granulat als Katzenstreu zur Ad- und Absorption von flüssigen Stoffen, insbesondere zur Ad- und Absorption von Exkrementen zur Hygiene in der Heimtierhaltung besteht aus mindestens zwei unterschiedlichen Materialien, und zwar aus einem ersten 25 bis 70 Gewichtsanteilen, insbesondere 25 bis 50 Gewichtsanteile eines hochquellfähigen Materials und einem zweiten 30 bis 75 Gewichtsteile, insbesondere 50 bis 75 Gewichtsanteile eines flüssigkeitsaufnehmenden und -haltenden Materials besteht.

## Beschreibung

Die Erfindung betrifft ein hochporöses Granulat zur Ad- bzw. Absorption von Flüssigkeiten und Gasen, insbesondere zur Verwendung als Hygiene-Tierstreu.

Für den stetig wachsenden Bedarf an ad- bzw. absorptionsfähigen Materialien zur Verwendung als Tierstreu sind diverse Produkte zur Aufnahme von flüssigen und/oder festen Exkrementen im Handel.

Bei den bekannten Tierstreu-Produkten handelt es sich im wesentlichen um Produkte auf Basis von Tonmineralen, wie Sepiolite, Attapulgite, Bentonite, oder synthetisch hergestellten mikroporigen Calciumsilikaten, Gasbeton-Abfällen oder porosierten gebrannten Tonen. Sie werden in Körnungen zwischen 0,5 oder 6 mm fraktioniert angeboten. Mit Ausnahme von Bentonit sind diese Produkte überwiegend von kompakter, steinartiger Konsistenz. Ein erhebliches Problem stellt hierbei die Entsorgung dar, weil diese Streumaterialien nur schwer oder überhaupt nicht verwittern bzw. verrotten.

So wird nach der EP-PS 0 013 915 und 0 014 343, sowie der DE-PS 31 21 403 und 29 02 079 aus Quarzmehl und gebranntem Kalk unter Zugabe von Wasser ein dünnbreiiges Gemisch hergestellt, das mittels anionenaktiven grenzflächenaktiven Tensiden zu einer mikroporigen Masse aufbereitet wird, die in Gießformen eingefüllt wird und nach Erstarrung mittels einer Schneidvorrichtung in Steinformate geschnitten wird, die dann einer Autoklavenhärtung bei 10 bis 16 bar Dampfdruck unterzogen werden und schließlich das gehärtete Calciumsilikatgestein in Brecheranlagen zu feinkörnigem Granulat aufbereitet. Da dieses Calciumsilikat einen stark alkalischen pH-Wert aufweist, ist zur Erzielung einer effizienten Geruchsbindung eine Behandlung mit den pH-Wert senkenden Salzlösungen auf ein neutrales Niveau erforderlich.

Nach der WO 91/1511 wird ein hochporöses Granulat aus gebranntem Ton dadurch hergestellt, daß zunächst Ton und andere Substanzen wie Quarzsand und Feldspat mit Wasser unter Beimischung eines Verflüssigers aufbereitet und die Masse danach zu Formkörpern verarbeitet und schließlich bei einer Temperatur zwischen 750°C bis 1050°C gebrannt wird. Das gebrannte keramische Produkt wird anschließend auf die gewünschte Fraktion gebrochen und mit einem den pH-Wert senkenden Säuresalz behandelt, so daß der pH-Wert nach der Behandlung zwischen pH-5 und pH-8 liegt.

Gemäß DE 43 12 279 A1 ist ein Granulat, bestehend aus 50 bis 90 Gewichtsanteilen einer Tonmineralkomponente, welche die Oberfläche eines Trägermaterials (10 bis 50 Gewichtsanteile) bedeckt, bekannt, das dadurch hergestellt wird, daß die Komponenten unter Flüssigkeitszugabe homogen vermischt, anschließend granuliert werden bis die Oberfläche des Trägermaterials ausreichend bedeckt ist. Die Granalien werden getrocknet.

Produkte dieser Art sind zwar in vorteilhafter Weise als Tierstreu geeignet, erfordern jedoch ein sehr aufwendiges Produktionsverfahren.

Granulate auf Bentonitbasis besitzen vor allem für den genannten Verwendungszweck als Hygiene-Tierstreu wesentliche Vorteile, da Bentonit-Produkte neben ihrer extrem hohen Saugfähigkeit bei Feuchtigkeit zur Agglomeration neigen, so daß entsprechende feuchte Zonen sofort visuell lokalisierbar sind. Zum Beispiel bei Verwendung als Tierstreu hat dies den Vorteil, daß nach einer gewissen Benutzungsdauer nicht die gesamte Tierstreu aus dem Konfektionsbehälter ausgetauscht werden muß; vielmehr können die benutzten Partien in Klumpenform gezielt entfernt und entsorgt werden.

Hierdurch werden der Verbrauch und damit die Entsorgungsmengen deutlich reduziert.

Ein entscheidender Nachteil der Bentonit-Granulate ist jedoch ihr vergleichsweise hohes Schüttgewicht von circa 900 bis 1000 g/l.

Demgegenüber liegen die Schüttgewichte von porosierten Granulaten aus Calciumsilikat oder gebranntem Ton um etwa 50% niedriger und zwar bei 400 bis 500 g/l.

Granulate entsprechend DE 43 12 279 A1 nutzen zwar die Vorteile der Tonmineralien, nachteilig wirkt sich jedoch der hohe Gewichtsanteil dieser Komponente auf den Preis aus.

Der Erfindung liegt die Aufgabe zugrunde, ein Granulat der eingangs genannten Art anzubieten, welches ein möglichst geringes Schüttgewicht aufweist, eine hohe Ad- und Absorptionsfähigkeit gegenüber Flüssigkeiten aufweist, preiswert und einfach herstellbar ist und im übrigen vorzugsweise auch eine visuelle Lokalisierung von mit Flüssigkeit in Berührung gekommenen Abschnitten ermöglicht.

Der Erfindung liegt die Erkenntnis zugrunde, daß dieses Ziel mit einem Granulat erreichbar ist, welches aus mindestens zwei unterschiedlichen Materialien, und zwar aus einem ersten hochquellfähigen Material und einem zweiten flüssigkeitsaufnehmenden und -haltenden Material besteht, und welches aus Körnern des zweiten Materials besteht, die von dem ersten hochquellfähigen Material ummantelt sind oder welches eine homogene Struktur beider Materialien aufweist. Der Begriff "erstes Material" umfaßt zunächst alle quellfähigen Materialien, insbesondere Tone und/oder Tonmineralien, also ebenso Zwei-Schicht- wie Drei-Schicht-Minerale oder Kombinationen daraus. Der Begriff "zweites Material" umfaßt alle flüssigkeitsaufnehmenden und - haltenden Materialien, insbesondere Naturprodukte und/oder synthetisch hergestellte Produkte, wie Calciumsilikate, Porenbeton und deren Recyclate usw..

Ein solches Granulat kann einerseits durch Aufschlämmen der Tonmineralkomponente in einer ausreichenden Flüssigkeitsmenge und Einmischen des zweiten Materials in diese Schlämme, so daß die Oberfläche des zweiten Materials ummantelt wird, andererseits durch homogenes Mischen beider Materialien ohne Flüssigkeitszugabe, anschließende Kompaktierung und Zerkleinerung oder Granulierung hergestellt werden.

In ihrer allgemeinen Ausführungsform betrifft die Erfindung danach ein Produkt zur Ad- und/oder Absorption von Flüssigkeiten in Granulatform, wobei das Produkt aus mindestens zwei unterschiedlichen Materialien, und zwar aus
- 25 - 70 Gewichtsprozent, insbesondere 25 - 50 Gewichtspozent mindestens eines hochquellfähigen Materials und
- 30 - 75 Gewichtsprozent, insbesondere 50 - 75 Gewichtsprozent mindestens eines flüssigkeitsaufnehmenden und -haltenden Materials besteht
und das erste Material das körnige zweite Material im schlüssigen Verbund in quasi gleichmäßiger Schichtdicke ummantelt oder beide Materialien homogen gemischt auftreten.

Zu den hochquellfähigen Materialien zählen vor allem die Drei-Schicht-Tonminerale und hier Bentronit (einschließlich Montmorillonit), das aufgrund seiner Gitterstruktur Wasser sehr gut bindet. Die Aufsaugkapazität von 400 - 500% kann nicht voll genutzt werden, da eine Verflüssigung des Materials eintritt.

Gegenüber reinen Bentonit-Produkten mit Schüttgewichten von ca. 900 bis ca. 1000 g/l besteht der Vorteil der erfindungsgemäßen Granulate insbesondere darin, daß Granulate mit Schüttgewichten von ca. 400 bis ca. 600 g/l herstellbar sind, wobei die bei Befeuchtung angestrebte Klumpenbildung vollwirksam erhalten bleibt und insgesamt infolge der höheren Porosität die Ab- bzw. Absorptionskapazität der Granulate quasi verdoppelt wird.

Ein bevorzugtes poröses Material ist gemäß der Erfindung feinteiliges Calciumsilikat und/oder feinteiliges Porenbetonmaterial. Derartige poröse Materialien sind in erheblicher Menge als Entsorgungsprodukte aus der Baustoffproduktion verfügbar und werden erfindungsgemäß als Recyclate verwertet.

Des weiteren können bei der Herstellung der zweiten Ausführungsform des Granulats das Unterkorn der Granulat-Herstellung sowie in den Filteranlagen anfallende Stäube als Recyclate in die Ausgangsmischung rückgeführt werden. Die Granulat-Herstellung ist auf diese Art und Weise ein abfallfreier Produktionsprozeß.

Die mittlere Korngröße der herzustellenden Granulate ist variabel einstellbar und wird bei der Ausführungsform 1 von der Korngröße des zweiten Materials, bei der Ausführungsform 2 durch die Zerkleinerung bestimmt. Für den erfindungsgemäßen Verwendungszweck sollte die Korngröße der Granulate zwischen 0,5 und 6,0 mm, vorzugsweise zwischen 0,5 und 3 mm ausgerichtet sein. Befeuchtete Partien bewirken lokalisierte Klumpenbildung (Agglomeration), wobei die Eindringtiefe im Materialbett von der Korngröße der Granulate beeinflußt wird. Die benutzten Stellen sind visuell jederzeit erkennbar und können als kompakte Klumpen aus dem Einstreubett entnommen werden.

Die Tonmineralkomponente sollte in möglichst feinteiliger Form als Mehl vorliegen, wodurch die Quellfähigkeit begünstigt wird.

Das poröse Material "Calciumsilikat/Porenbeton" ist je nach Herstellungsverfahren in unterschiedlichen Schüttgewichten und Korngrößen verfügbar. Im Sinne der Erfindung sind Schüttgewichte von ca. 300 bis ca. 400 g/l bevorzugt.

Das erfindungsgemäße Granulat sowie dessen Herstellung wird im folgenden beispielhaft unter Hinweis auf die beigefügten Zeichnungen näher erläutert. Es stellen dar:
- Fig. 1: ein Sekundärgranulat nach Ausführungsform 1 stark vergrößert,
- Fig. 2: ein Granulat nach Ausführungsform 2 stark vergrößert,

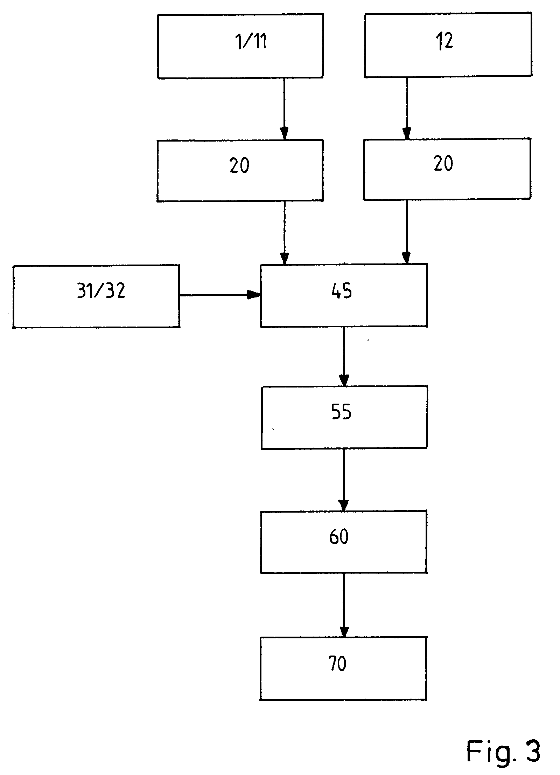

- Fig. 3: das Fließschema zur Herstellung des Granulats nach Ausführungsform 1,

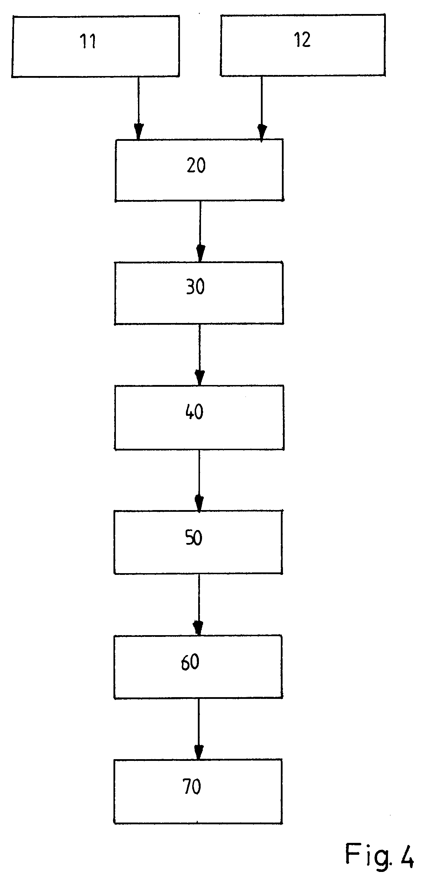

- Fig. 4: das Fließschema zur Herstellung des Granulats nach Ausführungsform 2.

Das Sekundärgranulat nach Ausführungsform 1 besteht aus dem zweiten Material (11) in Form eines porösen Grundkornes (1) und einem Mantel (2) aus einer Bentonitschicht, die das Grundkorn (1) vollflächig umgibt und mit der Oberfläche des Grundkornes (1) sowie dessen Poren (3) herstellungsmäßig verbunden ist. Die Schichtstärke des Mantels liegt z.B. zwischen ca. 0,25 mm und 0,5 mm.

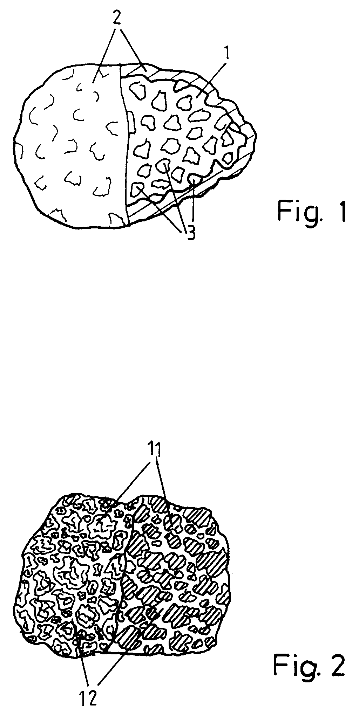

Das Sekundärgranulat ist in Fig. 1 auf der linken Hälfte als von dem Mantel (2) umgebene Vollkorn und auf der rechten Hälfte im Schnitt dargestellt.

Das Granulat nach Ausführungsform 2 besteht aus einer homogenen Struktur des ersten und zweiten Materials (12, 11). Es besitzt dieselben vorteilhaften Eigenschaften wie das Granulat der Ausführungsform 1; durch eine Variation der Gewichtsanteile können Qualitätsmerkmale wie gewollt erreicht werden. Das Granulat ist in Fig. 2 auf der linken Hälfte als Vollkorn und auf der rechten Hälfte im Schnitt dargestellt.

Im folgenden werden Beispiele zur Herstellung der Ausführungsform 1 beschrieben.

### Beispiel 1

In eine Misch-Granuliervorrichtung (20) werden 150 kg Wasser (31) eingefüllt und mit 125 kg Bentonitmehl (12) zu einer dünnbreiigen Schlämme (45) aufbereitet. In diese Bentonitschlämme (45) werden 375 kg Primärkörnung (1) in der Korngröße kleiner als 1,5 mm in Form von mikroporigem Calciumsilikat (11) und/oder Porenbeton (11) eingemischt. Die Primärkörnung (1) wird im Mischvorgang mit einer gleichmäßigen Schichtdichte der Bentonitschlämme (45) umhüllt, wobei Granulate in der Korngröße bis ca. 2,0 mm gebildet werden. Dieses quasi erdfeuchte Sekundärgranulat wird im Heißluftstrom (55) getrocknet, und mittels Siebmaschine (60) von vorhandenem Unterkorn und Überkorn in der gewünschten Granulatgröße selektiert. Das Endprodukt (70) hat nach Trocknung ein Schüttgewicht von ca. 450 g/l.

### Beispiel 2

Nach der in Beispiel 1 benannten Verfahrensweise werden 200 kg Wasser (31) mit 250 kg Bentonitmehl (12) zu einer Bentonitschlämme (45) aufbereitet und mit 250 kg Primärkörnung (11) der in Beispiel 1 benannten Art und Korngröße zu Sekundärgranulat aufbereitet. Das Endprodukt (70) hat nach der Trocknung ein Schüttgewicht von ca. 525 g/l.

### Beispiel 3

Verfahrensweise analog zu Beispiel 1 und/oder 2, jedoch mit Primärkorn (11) in der Korngröße kleiner als 3,0 mm. Korngröße des Sekundärgranulates ca. 4,0 mm.

Das Endprodukt (70) hat nach der Trocknung ein Schüttgewicht von ca. 400 g/l bis 450 g/l.

### Beispiel 4

Das mit einer Restfeuchte von ca. 25 Gewichtsprozent aus mikroporigem Calciumsilikat (11) und/oder Porenbeton (11) anstehende Grundkorn (1) wird zusätzlich mittels Wasserbesprühung auf einen Feuchtegrad von ca. 35 Gewichtsprozent angefeuchtet und in einer Mischvorrichtung mit trockenem Bentonitmehl (12) aufgepudert, wobei die auf das Grundkorn (1) aufgebrachte Oberflächenfeuchte die gebildete Bentonitaußenschale (2) durchdringt und eine gleichmäßige Umhüllung des Grundkorns (1) in der gewollten Schichtdicke aus Bentonit (12) sicherstellt, die sich bei der nachfolgenden Trocknung (55) verfestigt.

Entscheidend bei der erfindungsgemäßen Verfahrensweise ist, daß im Trocknungsvorgang eine hohe Eigenstabilität der Tonmineralbeschichtung des porösen Trägermaterials erreicht wird. Es wird ein quasi staubfreies Granulat erhalten, das den angestrebten Hygieneanspruch optimal erfüllt, wobei der Bentonitanteil im Vergleich zum Stand der Technik bis zu 75 Gewichtprozent reduziert wird und gleichzeitig die Granulatbedarfsmenge wegen der überlegenen Saugkapazität wesentlich verringert werden kann.

Ein weiterer Vorteil besteht darin, daß dieses Tierstreugranulat leicht und problemfrei entsorgbar ist, da dieses durch Witterungseinflüsse in seine Bestandteile zerfällt und zur Bodenauflockerung beiträgt.

Bei einem weiteren Verfahren zur Herstellung von hochporösem Granulat zur Verwendung als Tierstreu wird das poröse, saugfähige Grundkorn (1) aus Calciumsilikat (11) mit einer wässerigen Lösung (31) angefeuchtet, in welcher 0,5 bis 2,5 Gewichtsprozent, vorzugsweise 1,5 Gewichtsprozent, einer kaltquellenden Stärke (32), vorzugsweise eine Maisstärke (32), gelöst sind, und danach erfolgt die Ummantelung (2) mit einem hochquellfähigen - in Mehlfeinheit vorliegenden Tonmineral- vorzugsweise Bentonit (12), wobei der auf der Oberfläche des porösen, saugfähigen Grundkorn (1) gebildete klebrige Film in die aus hochquellfähigem Tonmineralmehl aufgebaute Deckschicht (2) eindringt, und nach Trocknung einen schlüssigen, rissfreien, festen Haftverbund bildet.

Durch den Zusatz der Maisstärke (32) wird eine äußerst sichere und dauerhafte Verbindung (praktisch Verklebung) von Ummantelung (2) und Grundkorn (1) erreicht, und ein diese optimale Verbindung erzielendes Verfahren gelöst.

Die folgenden Beispiele beziehen sich auf ein Verfahren zur Herstellung von hochporösem Granulat nach Ausführungsform 2.

### Beispiel 5

In einer Mischvorrichtung werden 75 Gewichtsanteile Porenbeton/Calciumsilikat-Feingut (11) einer Korngröße kleiner 0,5 mm und 25 Gewichtsanteile Bentonitmehl (12) zu einer homogenen Mischung (30) aufbereitet. Diese Mischung wird der Kompaktierung (40) kontinuierlich zugeführt und zu plattenartigen Formlingen in einer auf die gewünschte Korngröße abgestimmte Dicke, beispielsweise 4 mm, gepreßt. Die plattenartigen Formlinge werden zerkleinert (50), siebtechnisch (60) zur gewünschten Körnung, beispielsweise 1,0 bis 4,0 mm, selektiert und ggf. nachgetrocknet. Hierbei anfallendes Feingut wird im Kreislauf der Ausgangsmischung zugeführt. Das Endprodukt (70) hat ein Schüttgewicht von ca. 500 g/l, bei Befeuchtung bilden sich Klumpen und die Saugkapazität ist größer 150 Gewichtsprozent.

### Beispiel 6

Verfahrensweise analog zu Beispiel 5, jedoch unter Verwendung von 50 Gewichtsanteilen Porenbeton/Calciumsilikat-Feingut (11) mit einer Korngröße kleiner 0,5 mm und 50 Gewichtsanteilen Bentonitmehl (12). Das Endprodukt (70) hat ein Schüttgewicht von ca. 600 g/l.

Bei einem weiteren Verfahren zur Herstellung von hochporösem Granulat zur Verwendung als Tierstreu wird gemäß Beispiel 5 und 6 verfahren, das Mischgut (30) einer Kompaktierung (40) mit Profilwalzen ausgeführt, die Verfahrensschritte Zerkleinerung und Siebung entfallen somit.

Die in den Beispielen 5 und 6 erläuterten Herstellungsverfahren haben gegenüber dem bekannten Stand der Technik den Vorteil, daß der Herstellungsprozeß vereinfacht und der Energieaufwand zur Trockung gesenkt wird.

## Patentansprüche

1. Hochporöses Granulat (70) zur Ad- und Absorption von flüssigen Stoffen, insbesondere zur Ad- und Absorption von Exkrementen zur Hygiene in der Heimtierhaltung als Katzenstreu, dadurch gekennzeichnet, daß dieses Granulat aus mindestens zwei unterschiedlichen Materialien (12, 11) und zwar aus einem ersten
- 25 bis 70 Gewichtsprozente insbesondere 25 - 50 Gewichtsprozente mindestens eines hochquellfähigen Materials
und einem zweiten
- 30 bis 75 Gewichtsprozente insbesondere 50 - 75 Gewichtsprozente mindestens eines flüssigkeitsaufnehmenden und -haltenden Material besteht.

2. Hochporöses Granulat (70) nach Anspruch 1, dadurch gekennzeichnet, daß das erste Material eine Tonmineralkomponente (12) ist.

3. Hochporöses Granulat (70) nach Anspruch 1 oder 2, dadurch gekennzeichnet, daß die Tonmineralkomponente (12) aus Bentonit besteht.

4. Hochporöses Granulat (70) nach einem der Ansprüche 1 bis 3, dadurch gekennzeichnet, daß die Tonmineralkomponente (12) in Mehlfeinheit vorliegt.

5. Hochporöses Granulat (70) nach Anspruch 1, dadurch gekennzeichnet, daß das zweite Material (11) körnig ist und/oder eine poröse Struktur aufweist.

6. Hochporöses Granulat (70) nach Anspruch 1 oder 5, dadurch gekennzeichnet, daß das zweite Material (11) aus mikroporigem Calciumsilikat und/oder Porenbeton besteht.

7. Hochporöses Granulat (70) nach einem der Ansprüche 1, 5, 6, dadurch gekennzeichnet, daß das zweite Material Calciumsilikat/Porenbeton-Produktionsabfälle sind.

8. Hochporöses Granulat (70) nach einem der Ansprüche 1 bis 7, dadurch gekennzeichnet, daß dasselbe aus 30 bis 70 Gewichtsanteilen hochquellfähigen Bentonits und 70 bis 30 Gewichtsanteilen Calciumsilikat und/oder Porenbeton besteht.

9. Hochporöses Granulat (70) nach einem der Ansprüche 1 bis 8, dadurch gekennzeichnet, daß das zweite Material (11) als Trägermaterial von einem Mantel (2) aus Bentonit umgeben ist.

10. Hochporöses Granulat (70) nach einem der Ansprüche 1 bis 9, dadurch gekennzeichnet, daß der Bentonitmantel (2) eine Schichtstärke von ca. 0,25 bis 0,5 mm aufweist.

11. Hochporöses Granulat (70) nach einem der Ansprüche 1 bis 10, dadurch gekennzeichnet, daß das zweite Material (11) in einer Korngröße kleiner 1,5 oder 4,0 mm vorliegt.

12. Hochporöses Granulat (70) nach einem der Ansprüche 1 bis 11, dadurch gekennzeichnet, daß die Granalien (1, 2) in einer Korngröße kleiner 2 oder 4,5 mm vorliegen.

13. Hochporöses Granulat (70) nach einem der Ansprüche 1 bis 12, dadurch gekennzeichnet, daß für die Verbindung der Materialien eine kaltquellende Stärke (32), vorzugsweise Maisstärke, eingesetzt ist.

14. Hochporöses Granulat (70) nach einem der Ansprüche 1 bis 8, dadurch gekennzeichnet, daß dieses Granulat eine homogene Struktur, bestehend aus dem ersten und zweiten Material (12, 11) aufweist.

15. Hochporöses Granulat (70) nach einem der Ansprüche 1 bis 8 und 14, dadurch gekennzeichnet, daß das zweite Material (11) von in Filteranlagen angesammelten Porenbeton/Calciumsilikat-Stäuben als Recyclingmaterial gebildet ist.

16. Hochporöses Granulat (70) nach einem der Ansprüche 1 bis 8, 14 und 15, dadurch gekennzeichnet, daß bei der Zerkleinerung (50) von Porenbeton/Calciumsilikat anfallende Unterkorn in einer Korngröße kleiner 0,5 mm als Recyclingmaterial vorliegt.

17. Hochporöses Granulat (70) nach einem der Ansprüche 1 bis 12, dadurch gekennzeichnet, daß es ein Schüttgewicht von 300 g/l bis 700 g/l, insbesondere von mindestens 400 g/l und maximal 600 g/l aufweist.

18. Verfahren zur Herstellung von hochporösem Granulat (70) nach einem der Ansprüche 1 bis 12, dadurch gekennzeichnet, daß
- 30 bis 70 Gewichtsprozent Bentonitmehl (12) in Wasser (31) zu einer Schlämme (45) aufbereitet werden, und
- 30 bis 70 Gewichtsprozent poröses, körniges Trägermaterial (1, 11) mit einer gleichmäßigen Schicht (2) der Bentonitschlämme (45) bedeckt werden, und
- nach Trocknung (55) im Heißluftstrom die festen Granulate mittels Siebung (60) in Frakkonen eingeteilt werden.

19. Verfahren zur Herstellung von hochporösem Granulat (70) nach einem der Ansprüche 1 bis 12, dadurch gekennzeichnet, daß die Bentonitschicht (2) durch Bepudern auf das feuchte Trägermaterial (1) aufgebracht wird.

20. Verfahren zur Herstellung von hochporösem Granulat (70) nach einem der Ansprüche 1 bis 13, dadurch gekennzeichnet, daß das poröse saugfähige Material (1) aus Calciumsilikat mit einer Lösung, in welcher 0,5 bis 2,5 Gewichtsprozent, vorzugsweise 1,5 Gewichtsprozent, einer kaltquellenden Stärke (32), vorzugsweise eine Maisstärke, gelöst sind, angefeuchtet und danach die Ummantelung (2) mit einem hochquellfähigen in Mehlfeinheit vorliegenden Tonmineral (12) - vorzugsweise Bentonit - erfolgt, wobei der auf der Oberfläche das poröse, saugfähige Grundkorn (1) gebildete, klebrige Film in die aus hochquellfähigem Tonmineralmehl aufgebaute Deckschicht eindringt, und nach Trocknung einen schlüssigen, rißfreien, festen Haftverbund bildet.

21. Verfahren zur Herstellung von hochporösem Granulat (70) nach einem der Ansprüche 1 bis 8, 14 bis 17, dadurch gekennzeichnet, daß aus 30 bis 70 Gewichtsprozent Bentonitmehl (12) ohne Flüssigkeitszugabe mit - 30 bis 70 Gewichtsprozent Porenbeton/Calciumsilikat-Feingut (11) einer Korngröße kleiner 0,5 mm und/oder Porenbeton/Calcium-Silikatstäube eine homogene Mischung (30) hergestellt und kompaktiert (40) wird, die verdichteten Formlinge zerkleinert (50) das klassiert (60) druckfeste Granulat ergeben.

22. Verfahren zur Herstellung von hochporösem Granulat (70) nach einem der Ansprüche 1 bis 8, 14 bis 17, dadurch gekennzeichnet, daß das in den Verfahrensschritten Zerkleinerung und Klassierung anfallende Feingut als Recyclingmaterial in die Ausgangsmischung zurückgeführt wird.

23. Verfahren zur Herstellung von hochporösem Granulat (70) nach einem der Ansprüche 1 bis 8, 14 bis 17, dadurch gekennzeichnet, daß die homogene Mischung (30) mit Glattwalzen oder Profilwalzen (40) gepreßt wird.
